Europäisches Patentamt

European Patent Office

Office européen des brevets

(11) Publication number: **0 050 425**
**B1**

(12) **EUROPEAN PATENT SPECIFICATION**

(45) Date of publication of patent specification: **26.03.86**

(51) Int. Cl.⁴: **G 02 B 26/10, G 03 G 15/32**

(21) Application number: **81304423.7**

(22) Date of filing: **24.09.81**

(54) **A method of replacing a laser.**

(30) Priority: **29.09.80 US 191783**

(43) Date of publication of application:
**28.04.82 Bulletin 82/17**

(45) Publication of the grant of the patent:
**26.03.86 Bulletin 86/13**

(84) Designated Contracting States:
**DE FR GB**

(56) References cited:
**DE-C- 862 557**
**FR-A-1 518 406**
**GB-A-1 390 724**
**US-A-3 566 302**
**US-A-3 943 461**
**US-A-4 213 157**

(73) Proprietor: **XEROX CORPORATION**
**Xerox Square - 020**
**Rochester New York 14644 (US)**

(72) Inventor: **Norton, James R.**
**4480 Boynton Road**
**Walworth New York 14568 (US)**

(74) Representative: **Weatherald, Keith Baynes et al**
**European Patent Attorney Rank Xerox Limited**
**Patent Department 338 Euston Road**
**London NW1 3BH (GB)**

Courier Press, Leamington Spa, England.

## Description

This invention relates to a method of replacing a laser in an optical system, such as a raster scanner.

Present day raster type scanners which may, for example be used to write images on the photoconductor of a xerographic apparatus for subsequent development and transfer to a copy substrate material, typically employ a laser as the source of the scanning beam. An optical system which includes a rotary, scanning polygon, sweeps the beam across the object being scanned, as for example the aforementioned photoconductor. In the case where the scanner serves to produce or write images, a modulator is disposed astride the beam path to vary the intensity of the beam in accordance with video image signals input thereto.

However, the optical tolerances for scanners of this type are extremely tight in order to ensure that a beam of the requisite size and intensity strikes the object being scanned and the correct image contrast, size, orientation, etc. is achieved. At the same time it is also recognized that the laser itself, as well as other elements in the optical system, is subject to failure and may from time to time require servicing or replacement. In that event, the critical alignment of the various components in the optical system including the laser, which are set at the factory at the time of manufacture, is disturbed and accurate realignment must be made if acceptable operation is again to be achieved.

The historical problem with replacing laser assemblies in scanners is that the precise realignment of the optical components required special tools and the fixtures only available at the factory such as would be necessary with the apparatus disclosed in US—A—3 881 107. Laser replacement is additionally troublesome because commercially available lasers have a relatively large tolerance as respect both the location and angle of the laser beam, precluding the possibility that a laser could be replaced by simply inserting the new laser in the same exact position of the old laser and alignment achieved.

The established method of aligning the laser to the optical system is by serially adjusting a pair of mirrors positioned between the laser and the remainder of the optical system. However, this alignment technique is deemed unacceptable for use in the field because of the sensitive precision adjustments involved, the special alignment tools and fixtures required, the high degree of skill and know how required, and concern over laser safety, particularly the safety of the technician performing the alignment. As a result, in instances where replacement or realignment of the laser is required, the typical procedure was to either return the scanner to the factory for installation and alignment of a new laser or to structure the optical system design so that the entire optical system, including the laser, could be removed from the scanner as a unit and replaced with a factory prealigned module. Both procedures are relatively expensive and cumbersome.

This invention reduces the problem of aligning the optical axis of a replacement laser with that of the associated apparatus to a question of making two line segments collinear, the invention recognizing that if one line segment comprises the scanner optical path and the other the laser beam, then by establishing a known point on each of the line segments, collinearity could be achieved by making the two points coincide and then angularly adjusting the laser line segment until the segments are collinear. The present invention provides a unique laser assembly alignment system where the laser beam is prealigned to a known point with respect to the laser assembly mounting surface in the scanner. This arrangement substantially reduces the laser beam positional tolerance zone and avoids the need for translating adjustment since the laser alignment point and the scanner alignment point can be made substantially coincident by the use of a precision ball joint or similar mechanism which allows rotation of the laser assembly about the common point. Inasmuch as the laser assembly is relatively long, simple adjusting devices such as screws may be used at the laser assembly remote end to provide sensitive, precise, and reasonably uncoupled angular adjustment of the laser assembly.

This invention, which is intended to solve or at least alleviate the aforedescribed problems, introduces a method of servicing or replacing the laser of a scanning apparatus in the field. The aforesaid method comprises the steps indicated in the claim.

Other objects and advantages will be apparent from the ensuing description and drawings in which:

Figure 1 is an isometric view of an exemplary laser driven raster scanner embodying the present invention;

Figure 2 is a side view of the scanner shown in Figure 1;

Figure 3 is a top view of the scanner shown in Figure 1;

Figure 4 is an enlarged view showing details of the laser supporting mechanism enabling field replacement and realignment of the laser following servicing or replacement thereof;

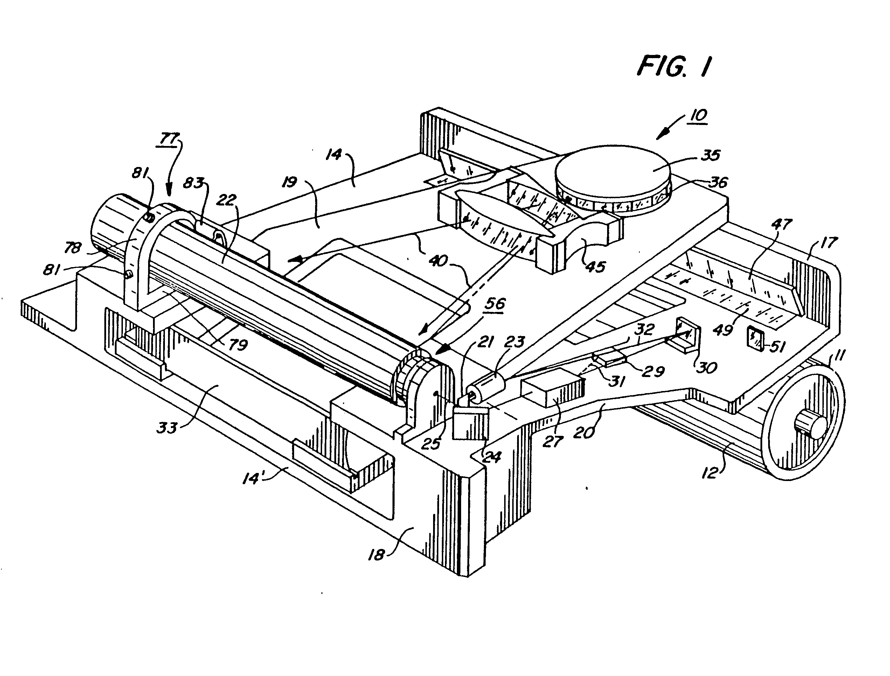

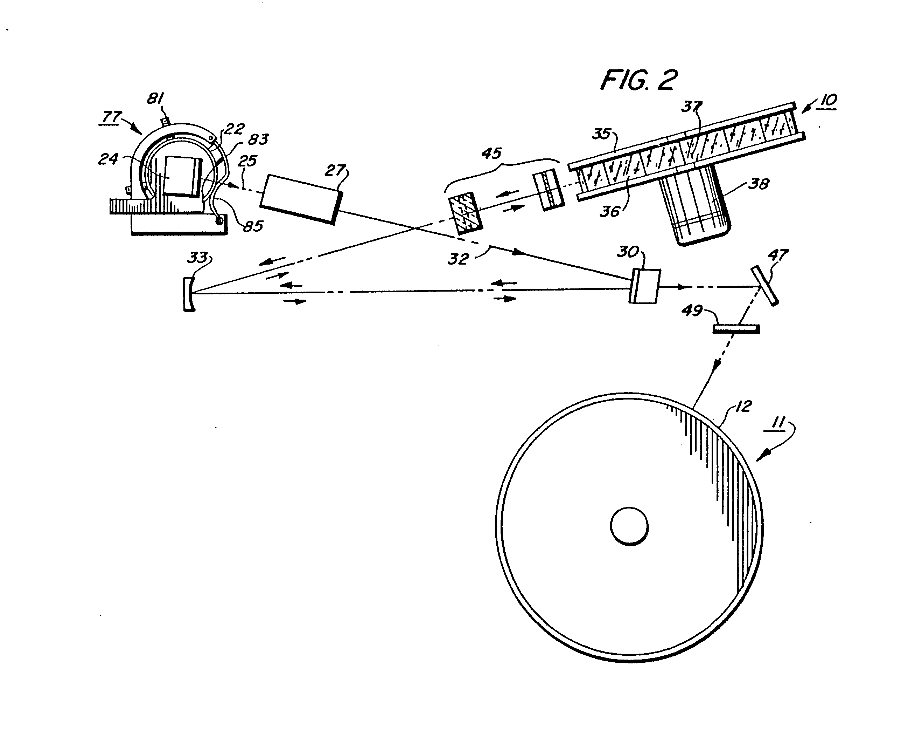

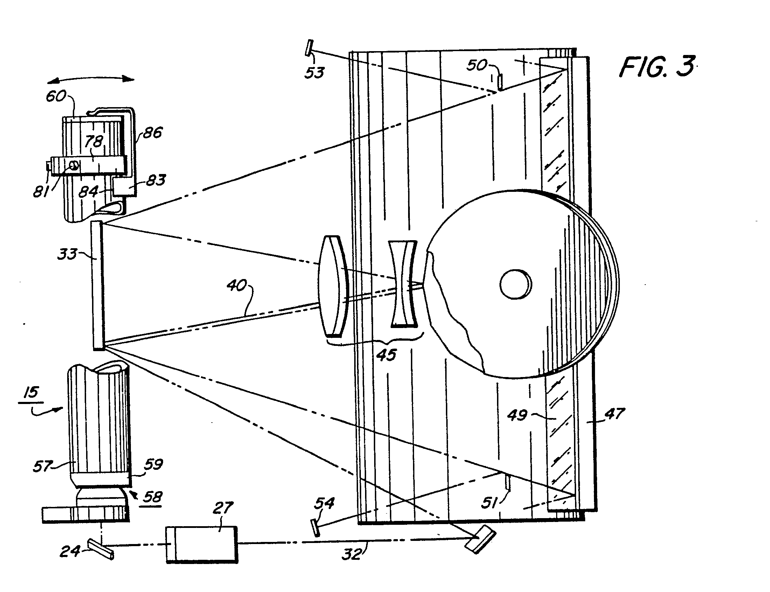

Referring to Figures 1—3 of the drawings, a raster output scanner (ROS) 10 embodying the present invention is thereshown. As will appear, scanner 10 generates latent electrostatic images on the photoconductive surface 12 of a xerographic member 11 (shown here in the form of a drum) of a xerographic system (not shown). As will be understood by those familiar with the xerographic arts, the latent electrostatic images are created on the previously uniformly charged photoconductive surface 12 through selective exposure thereof in response to image information in the form of video image signals or pixels input to modulator 27 of scanner 10. The latent electrostatic image so created is thereafter developed and the developed image transferred to a suitable copy substrate material i.e. a copy sheet. The transferred image is thereafter fixed to form a permanent copy.

Scanner 10 includes a generally rectangular base 14 on which the several components of scanner 10 are mounted in operative relation. Base 14 includes upright end supports 17, 18. A polygon bridge support 19 extends downwardly from the upper portion of end support 17 to edge 14' of base 14. An oppositely facing, downwardly inclined side support 20 extends along one side of base 14 from the corner area of end support 18 to the opposite end of base 14 proximate end support 17. The angle of inclination of bridge support 19 and side support 20 is chosen to accommodate system optical requirements and assure maximum compactness.

A suitable source of high intensity light such as a laser, Light Emitting Diodes (LEDs), Infra-Red (IR) laser diodes, etc. is provided. In the exemplary arrangement shown, laser 22 is mounted on end support 18 in a plane spaced above the plane of base 14. The longitudinal axis of laser assembly 15 generally parallels edge 14' of base 14 and end supports 17, 18. As will appear more fully herein, laser assembly 15 is mounted on end support 18 through an adjustable supporting mechanism which enables the beam of light output by laser 22 to be aligned with the scanner optical axis in the field by service personnel. A beam focusing lens 67 is provided to focus the laser beam internal to modulator 12, as will appear.

A movable shutter 21 is disposed adjacent the beam discharge side of laser assembly 15, shutter 21 serving to intercept the beam 25 emitted by laser 22 when scanner 10 is not in use. This permits laser 22 to be operated continuously, prolonging laser life. A solenoid 23 is provided for withdrawing shutter 21 when it is desired to operate scanner 10.

The scanner optical path O leading from the beam discharge end of laser assembly 15 to the photoconductive surface 12 includes a first beam folding mirror 24 mounted on end support 18 adjacent the laser output. Beam modulator 27 is disposed downstream of mirror 24 on the downwardly inclined side support 20. Mirror 24 intercepts the laser beam 25 and turns, (i.e. folds) the beam through an angle of approximately 90° (in the horizontal plane) and downwardly toward modulator 27. Modulator 27, which may comprise any suitable light modulator, as for example an acousto optic type modulator, selectively deflects the beam 25 to provide zero order and first order beams 31, 32 in accordance with the video image signal input thereto. A beam stop 29 on side support 20 intercepts the zero order beam 31. The first order beam 32 output by modulator 27 strikes a second beam folding mirror 30 mounted on side support 20 downstream of and below modulator 27.

Mirror 30 reflects the first order beam back toward laser 22 along a generally horizontal plane paralleling base 14 to a third power mirror 33.

Mirror 33, which is supported on base 14 adjacent to and below laser 22, folds the beam 32 back and directs the beam upwardly along a path generally paralleling the surface of bridge support 19 toward polygon 35. As will be seen, the scanner optical path O is such that the beam reflected by mirror 33 passes through one side of lens 45 to strike the mirrored facets of scanning polygon 35.

Power mirror 33 comprises a cylindrical mirror with power in the cross-scan plane. Mirror 33 functions to aid focusing of the cross-scan beam waist onto the facets of scanning polygon 35. Lens 45 performs cross-scan focusing with the aid of power mirror 33 and collimates the beam in the polygon facet scan direction.

Scanning polygon 35 is supported on shaft 37 of polygon drive motor 38 which in turn, is suspended from the underside of bridge support 19, suitable bearing means (not shown) being provided to accommodate rotation of shaft 37 and the polygon 35 mounted thereon. The polygon/drive motor described preferably comprises a unitary assembly, the longitudinal axis of which, due to the mounting thereof on bridge support 19, is substantially perpendicular to the plane of bridge support 19. Inasmuch as bridge support 19 is inclined, the plane of rotation of polygon 35 is inclined and generally parallel with the plane of bridge support 19.

Polygon 35 has a plurality of mirror-like facets 36 formed on the periphery thereof, facets 36 reflecting the first order beam 32 impinging thereon through a predetermined scan arc as polygon 35 rotates to provide scan beam 40.

The scan beam 40 reflected by facets 36 of polygon 35 pass through imaging lens 45, lens 45 serving to focus the beam into the photoconductive surface 12. Lens 45 is mounted on bridge support 19 downstream of polygon 35. The now focused scan beam 40 from lens 45 strikes mirror 33 which reflects the scan beam back along a plane substantially paralleling base 14 to a fourth beam folding mirror 47.

Mirror 47, which is mounted on base 14 adjacent end section 17, reflects the scan beam in a generally downward direction through slot-like aperture 49 in base 14 to the photoconductive surface 12 of the aforementioned xerographic system.

A pair of pickoff mirrors 50, 51 are mounted on base 14 in a position to intercept the scan beam 40 at the extremities of the beam sweep. Pickoff mirrors 50, 51 reflect the intercepted beam toward state-of-scan (SOS) and end-of-scan (EOS) detectors 53, 54 respectively, mounted on end support 18. SOS and EOS detectors 53, 54 comprise any suitable light sensors such as photodiodes adapted to generate a signal in response to the presence of light. The position of the cooperating pickoff mirrors 50, 51 and detectors 53, 54 control the length of the line sync (LS) period.

As used herein, line sync (LS) is the period required for scan beam 40 to travel from SOS detector 53 to EOS detector 54. An image line which, as will be understood, normally includes certain steady state signals or pixels before and after the image signals or pixels representing the particular image to enable erasure of margin areas by the scan beam 40, is normally equal in period to that of the line sync (LS) signal. Where the image line and line sync (LS) periods are not equal, compensating adjustments to the pixel clock frequency are automatically made to establish equilibrium, as will appear more fully herein.

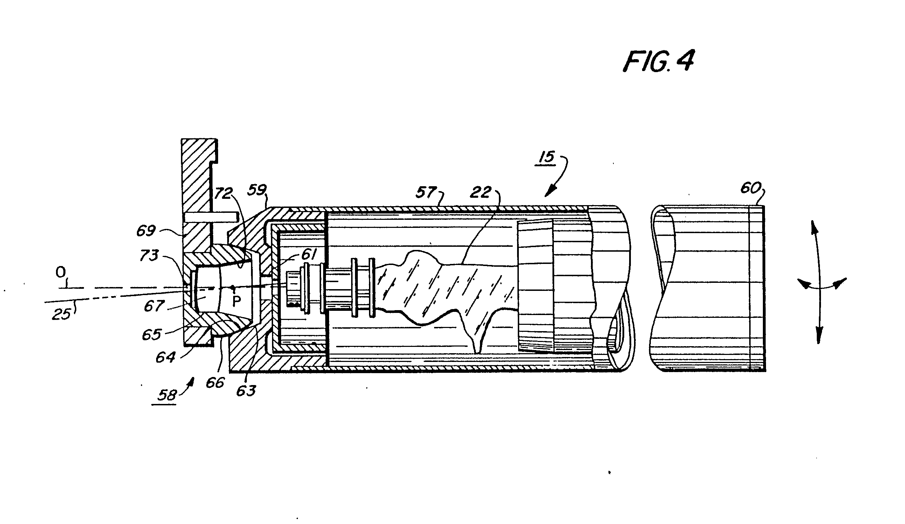

Referring to Figures 1—4, an adjustable support mechanism for laser assembly 15 permits servicing and/or removal and replacement of the laser assembly in the field. Referring particularly to Figure 4, laser assembly 15 includes laser plasma tube 22 housed in an elongated cylindrical housing 57 having front and rear end caps 59, 60 respectively attached thereto. Front end cap 59 has an aperture 61 therethrough to enable the light beam 25 generated by laser 22 to pass to the scanner optical path. Front end cap 59 comprises one half of the spherical bearing 58 and for this purpose, the exterior surface of end cap 59 is provided with a conical bearing surface 63, forming bearing half 64. The mating half 65 of spherical bearing 58 is fixedly attached by mounting bracket 69 to end support 18 and has a spherically formed outer bearing surface 66 for mating engagement with the bearing surface 63 of bearing half 64. A tapered cylindrical recess 72 in bearing half 65 is coaxial with the optical axis O of scanner 15 and has a beam focusing lens 67 disposed therein. Aperture 73 in the wall portion 74 of the bearing half 64 behind lens 67 permits the laser beam from lens 67 to pass to the scanner optical system.

Bearing 58 serves as the front or forward support for the laser assembly 15, the bearing halves 64, 65 thereof mating together to permit rotation of laser assembly 15 about a point P coincident with the optical axis O of scanner 10 during alignment, as will appear.

Laser plasma tube 22 is fixedly disposed in housing 57 by suitable means (not shown) with the laser beam output therefrom prealigned to a preset point P. Point P comprises both a point on the optical axis O of a scanner 10 and the center of rotation of the spherical bearing 58 supporting the beam discharge end of the laser assembly in scanner 10. To enable point coincidence of the laser beam 25 with the optical axis O of scanner 10 to be achieved, the laser beam is accurately prealigned to the center of rotation of the spherical bearing 58, one half 64 of which is part of the laser assembly 15 and the other half 65 of which is a part of scanner 10 as described above. This permits the optical axis of scanner 10 and the axis of the laser beam to be brought into coincidence by pivoting the laser assembly about point P following joinder of bearing halves 64, 65.

Referring particularly to Figures 1—3, the opposite or rear end of housing 57 is received in and supported by a rear support member 77. Support member 77 comprises a generally semi-circular part 78 and supporting base 79, base 79 being fixedly secured to end support 18 as by means of screws (not shown). The semi-circular part 78 of support member 77 has radially disposed screw type members 81 at predetermined spaced distances along the periphery of segment 78, members 81 being abuttable with the outer periphery of housing 57 to adjust the relative position of laser assembly 15 in support member 77. As will be understood, adjustment of screws 81 displaces the laser assembly 15 relative to the support member 77 and effectively pivots the laser assembly about point P when aligning the laser beam with the optical axis O of scanner 10.

A spring-like retainer 83 is pivotably secured to base 79 of support member 77. The opposite end of retainer 83 is adapted to lockingly engage pin 84 proximate the end of semi-circular part 78 of support member 77. Retainer 83 is formed with an inwardly curved segment 85 which engages the outer periphery of housing 57 on locking of retainer 83 into position to bias the housing 57 into abutment with adjusting members 81. A radially inward projecting resilient finger 86 is appended to retainer 83, finger 86 engaging rear end cap 60 to bias the laser assembly 15 forward and hold the bearing halves 64, 65 in mating engagement.

During operation, the light beam 25 emitted by laser 22 is turned through an arc of more than 90° (in the horizontal plane) and reflected downwardly by fold mirror 24 to the inlet of modulator 27 (Figs. 1—3). As described, modulator 27 either directs the beam against beam stop 29 (zero order beam 31) or to fold mirror 30 (first order beam 32) in accordance with the content of the video image signals input thereto. The first order beam 32 striking mirror 30 is reflected back in the direction of laser 22 but along a lower level of scanner 10 to power mirror 33 disposed in the area below laser 22. Mirror 33 reverses (i.e. folds) the beam 32 and turns the beam upwardly to cause the beam to impinge against the mirror-like facets 36 of the rotating polygon 35. Polygon 35 sweeps the light beam through a preset scan arc and reverses (i.e. folds) the beam direction so that the scan beam 40 passes through lens 45 to power mirror 33. As will be understood, lens 45 serves to focus the scan beam 40 onto the photoconductive surface 19. As the scan beam 40 emitted from lens 45 sweeps across mirror 33, the beam is reversed (i.e. folded) and directed forward by mirror 33 to fold mirror 47. Mirror 47 turns the scan beam 40 downwardly through scan slot 49 to impinge on the photoreceptor 11.

As the scan beam 40 is swept by polygon 35 through the scan arc, pickoff mirrors 50, 51 intercept the beam. Light reflected by mirrors 50, 51 impinges on SOS and EOS detectors 53, 54 to provide the aforedescribed SOS and EOS signals.

Where replacement or off line servicing is required, the laser assembly 15 is removed from scanner 10 by releasing spring retainers 83, 86 and withdrawing the laser assembly 15. Separation occurs at the spherical bearing halves 64, 65 (Figs. 1—4).

When replacing or installing a new laser assembly 15, the procedure is reversed. However, following replacement, a critical alignment of the laser beam with the scanner optical path O must be made if scanner 10 is to operate correctly.

For realignment following replacement or servicing, the laser assembly 15 is positioned so that bearing half 64 of spherical bearing 58, which is attached to laser assembly 15, is fitted over the bearing half 65 fixed to the scanner frame. The cylindrical exterior of the laser housing adjacent the opposite end thereof rests against rear support member 77 and the adjusting screws 81 projecting therefrom. Spring retainers 83, 86 are brought into place to bias the laser assembly against support member 77 and screws 81 thereof, and to force the laser assembly forward to bring bearing halves 64, 65 of spherical bearing 58 into mating contact.

As described, laser plasma tube 22 of laser assembly 15 is prealigned such that on mounting of the laser assembly in place on scanner 10, the beam 25 emitted by laser 22 intersects point P on the scanner optical axis O which is also the center of rotation of spherical bearing 58. Following mounting of the laser assembly 15 on scanner 10, laser 22 is turned on and a suitable meter, i.e. a DVM, coupled to the output lead of peak responding circuit 131. It is understood that either or both detectors 53, 54 may be provided with peak responding circuit 131 and in the case where both detectors incorporate circuit 131, either or both detectors are used to effect alignment. Polygon motor 38 is energized to rotate polygon 35.

It is understood that the aforedescribed laser supporting mechanism serves to retain, the laser assembly in position once the critical alignment has been achieved. And while a ball point type of support for laser assembly 15 is illustrated herein, other support types permitting pivoting of the laser assembly 15 about a predetermined point may be envisioned. Additionally, it will be understood that the position of bearing halves 64, 65 may be reversed.

## Claim

A method of replacing in the field the laser (22) in a raster scanner (10), characterized by the steps of:

removing the bias (83) retaining the old laser tube in position;

removing the old tube from its mounting (77);

inserting into the mounting a new laser tube having a socket (64) at its beam discharge end;

seating the socket over a preset mating ball (65) fixed relatively to the mounting;

pivoting the other end of the laser tube about the ball-and-socket coupling until the axis of the new laser tube is coaxial with the scanner optical system, and

repositioning the bias (83) to apply axial force to the said coupling and to hold the said other end fixed relative to the mounting.

## Patentanspruch

Verfahren zum Austauschen des Lasers (22) in einem Vom Hersteller ausgelieferten Rasterabtaster (10), gekennzeichnet durch die Schritte

des Entfernens des Spanneinrichtung (83), die die alte Laserröhre in Position hält,

des Entfernens der alten Röhre von ihrer Halterung (77),

des Einsetzens einer neuen Laserröhre mit einem Zapfenlager (64) an ihrem Strahlenaustrittsende in die Halterung,

des Aufsetzens des Zapfenlagers auf eine voreingestellte, relativ zur Halterung ortsfeste Gegenkugel (65),

des Drehens des anderen Endes der Laserröhre um die Kugelgelenk-Kupplung, bis die Achse der neuen Laserröhre koaxial mit dem optischen System des Abtasters ist, und

des Wieder-In-Stellung-Bringens der Spanneinrichtung (83), um eine Axialkraft auf die genannte Kupplung aufzubringen und das genannte andere Ende relativ zur Halterung ortsfest zu halten.

## Revendication

Procédé de remise en position sur place du laser (22) dans un dispositif de balayage récurrent (10), caractérisé par les étapes suivantes:

— suppression de la sollicitation (83) maintenant l'ancien tube laser en position;

— enlèvement de l'ancien tube de sa monture (77);

— insertion dans la monture d'un nouveau tube à laser ayant une embase (64) à son extrémité de décharge de faisceau;

— mise en place de l'embase sur un roulement d'accouplement pré-réglé (65) fixe par rapport à la monture;

— pivotement de l'autre extrémité du tube laser autour de l'accouplement à billes et embase jusqu'à ce que l'axe du nouveau tube laser soit coaxial avec celui du système optique du dispositif de balayage; et

— remise en place de la sollicitation (83) de manière à appliquer une force axiale à l'accouplement et à maintenir l'autre extrémité dans une position fixe par rapport à la monture.

FIG. 1

0 050 425

FIG. 2

FIG. 3

FIG. 4